# EUROPÄISCHE PATENTSCHRIFT

(11) **EP 3 852 965 B1**
(45) Veröffentlichungstag und Bekanntmachung des Hinweises auf die Patenterteilung: **02.11.2022**
(21) Anmeldenummer: 19762372.1
(22) Anmeldetag: 02.09.2019
(51) Int. Cl.: B23K 26/00, B21C 37/08, B23P 23/02, B23Q 1/76

(54) **VERFAHREN ZUR SCHNEIDENDEN BEARBEITUNG VON ROHREN IN EINER LASERROHRSCHNEIDMASCHINE SOWIE LASERROHRSCHNEIDMASCHINE**
METHOD FOR CUTTING TUBES IN A LASER TUBE CUTTING MACHINE AND LASER TUBE CUTTING MACHINE
PROCÉDÉ D'USINAGE PAR DÉCOUPE DE TUBES DANS UNE MACHINE DE DÉCOUPE DE TUBES PAR LASER AINSI QUE MACHINE DE DÉCOUPE DE TUBES PAR LASER

(30) Priorität: 17.09.2018 DE 102018122717
(43) Veröffentlichungstag der Anmeldung: 28.07.2021
(73) Patentinhaber: TRUMPF Werkzeugmaschinen GmbH + Co. KG, 71254 Ditzingen (DE)
(72) Erfinder: RUETZ, Karsten, 71640 Ludwigsburg (DE)
(74) Vertreter: Trumpf Patentabteilung
(86) Internationale Anmeldenummer: PCT/EP2019/073323
(87) Internationale Veröffentlichungsnummer: WO 2020/057951

(56) Entgegenhaltungen:
- EP-A1- 2 548 691
- DE-A1-102015 115 456
- DE-A1-102016 104 107
- DE-A1-102016 106 067
- DE-B3-102004 020 945
- JP-A- S62 173 129

## Beschreibung

Die Erfindung betrifft ein Verfahren zur schneidenden Bearbeitung von Rohren in einer Laserrohrschneidmaschine sowie eine Laserrohrschneidmaschine, insbesondere zur Durchführung des Verfahrens.

Aus der DE 10 2016 106 067 A1, die die Merkmale der Oberbegriffe der Ansprüche 1 und 9 offenbart, sind eine Laserrohrschneidmaschine sowie ein Verfahren zur schneidenden Bearbeitung von Rohren in einer solchen Laserrohrschneidmaschine bekannt. Diese Laserrohrschneidmaschine umfasst eine Werkstückbewegungseinrichtung, durch welche ein zu bearbeitendes Rohr gehalten und relativ zu einer das Rohr abstützenden Durchschiebeeinrichtung verfahren wird. Benachbart zur Durchschiebeeinrichtung in einem Bearbeitungsraum ist eine Laserbearbeitungsvorrichtung vorgesehen. Diese umfasst einen Bearbeitungskopf, durch welchen ein Laserstrahl auf das Rohr gerichtet wird. Im Bearbeitungsraum benachbart zur Laserbearbeitungsvorrichtung ist zusätzlich eine Werkzeugaufnahme vorgesehen, um ein Werkzeug zur mechanischen Bearbeitung des Rohres aufzunehmen. Dieses Werkzeug wird in einer Bewegungsachse senkrecht zur Längsachse des Rohres, entlang dieses relativ zur Durchschiebeeinrichtung verfahrbar ist, auf das Rohr zur mechanischen Bearbeitung zubewegt. Während der Bearbeitung des Rohres wird dieses durch Spannbacken der Durchschiebeeinrichtung gehalten. Diese Spannbacken weisen eine Nachgiebigkeit bei Überschreitung einer voreingestellten Spannkraft auf, die bei einer Laserbearbeitung nicht überschritten wird, da keine Kräfte auftreten, die von der Durchschiebeeinrichtung aufzunehmen sind. Bei der mechanischen Bearbeitung können höhere Kräfte auftreten, welche die voreingestellte Spannkraft der Spannbacken übersteigen. Dadurch kann es bei wegen der Nachgiebigkeit von zumindest einer Spannbacke zu einem Lageversatz des Rohres innerhalb der Durchschiebeeinrichtung kommen und die mechanische Bearbeitung beeinträchtigen oder unmöglich machen.

Aus der EP 2 548 691 A1 ist eine Bearbeitungsvorrichtung zum Bearbeiten von Rohren vorgesehen. Diese Bearbeitungsvorrichtung umfasst eine Fanglanze mit einer Auffangöffnung, welche beim Bearbeiten des Rohres in das zu bearbeitende Rohr eingeführt und die Auffangöffnung der Fanglanze unterhalb der Bearbeitungsstelle positioniert wird.

Aus der DE 10 2016 104 107 A1 ist eine Werkstückabstützung vorgesehen, welche bei einer Bearbeitungsmaschine zum schneidenden Bearbeiten von Rohren zwischen einer Werkstückbewegungseinrichtung zur Aufnahme und zur Verschiebung des Rohres und einer Durchschiebeeinrichtung positioniert ist. Eine analoge Vorrichtung geht aus der CN 203621737 U hervor.

Aus der DE 10 2016 221 227 A1 ist eine Vorrichtung zum Einspannen von Werkstücken bekannt, welche für eine Werkstückbewegungseinrichtung vorgesehen ist, die ein zu bearbeitendes Rohr aufnimmt und durch welche das zu bearbeitende Rohr relativ zu einer Durchschiebeeinrichtung verfahrbar ist.

Aus der JP 62-173 129 A ist eine Maschine zur spanenden Bearbeitung von Rohren offenbart. Diese Spanneinrichtung weist ein Spannfutter auf, durch welches das Rohr fest eingespannt ist. Eine auftretende seitliche Kraft durch die mechanische Bearbeitung wird durch die Spannkraft des Spannfutters aufgenommen. Während der mechanischen Bearbeitung des Rohres, wie beispielsweise beim Einbringen eines Gewindes an einer Außenseite des Rohres, wird ergänzend an einer Innenseite des Rohres eine Vibrationsdämpfungseinrichtung zur Anlage gebracht, um die Bearbeitungsqualität zu erhöhen.

Der Erfindung liegt die Aufgabe zugrunde, ein Verfahren zum Bearbeiten von Rohren in einer Laserrohrschneidmaschine sowie eine Laserrohrschneidmaschine vorzuschlagen, wodurch eine zusätzliche mechanische Bearbeitung des Rohres mit einem Werkzeug ergänzend zur Laserbearbeitung ermöglicht ist.

Diese Aufgabe wird durch ein Verfahren zur schneidenden Bearbeitung von Rohren in einer Laserrohrschneidmaschine gelöst, bei der das Rohr zusätzlich zur Laserbearbeitung mit einem Werkzeug mechanisch bearbeitet und zumindest ein Gegenhalter vor Beginn der mechanischen Bearbeitung des Rohres mit dem Werkzeug in eine Arbeitsposition zur Anlage am Rohr verfahren wird. Durch diesen in die Arbeitsposition verfahrbaren Gegenhalter kann eine Abstützung des Rohres erzielt werden, welche der Krafteinleitung durch das Werkzeug bei der mechanischen Bearbeitung entgegenwirkt. Der Gegenhalter kann Kräfte aufnehmen, welche durch die Spannbacken der Durchschiebeeinrichtung nicht aufgenommen werden können. Dadurch kann in der Laserrohrschneidmaschine aufeinanderfolgend sowohl eine abtragende oder schneidende Bearbeitung des Rohres mittels des Laserstrahles als auch eine mechanische Bearbeitung des Rohres mit dem zumindest einen Werkzeug erfolgen. Bevorzugt können dabei Bearbeitungen wie Zerspanen, Fließbohren, Furchen, Räumen, Schleifen, Bürsten, Gewindeschneiden oder dergleichen durchgeführt werden.

Vorteilhafte Varianten des Verfahrens werden in den abhängigen Ansprüchen 2 bis 8 angegeben.

Des Weiteren wird der zumindest eine Gegenhalter in der Arbeitsposition feststehend gehalten. Unabhängig der Krafteinleitung durch das Werkzeug auf das Rohr nimmt der Gegenhalter die Kräfte während der mechanischen Bearbeitung auf, ohne dass eine Nachgiebigkeit gegeben ist.

Eine weitere bevorzugte Ausgestaltung des Verfahrens sieht vor, dass der Gegenhalter zur Anlage an einer Außenseite des Rohres in die Arbeitsposition übergeführt wird. Dies ermöglicht eine einfache Zuführung von außen in die Arbeitsposition und bei Nichtgebrauch in eine entfernte Ruheposition.

Des Weiteren wird das Werkzeug zur mechanischen Bearbeitung des Rohres von der Außenseite gegen das Rohr zugeführt. Somit wirken der Gegenhalter als auch die Bearbeitungskräfte durch das Werkzeug während der mechanischen Bearbeitung jeweils von einer Außenseite auf das Rohr.

Eine weitere bevorzugte Ausgestaltung des Verfahrens sieht vor, dass der Gegenhalter während einer Laserbearbeitung des Rohres in einer Ruheposition entfernt zum Rohr positioniert und vor der mechanischen Bearbeitung des Rohres mit dem Werkzeug in die Arbeitsposition zur Anlage übergeführt wird. Dadurch wird eine gegebenenfalls erfolgende Verschmutzung des Gegenhalters gegen Abbrand, Schlacke oder dergleichen während des Laserschneidens verhindert.

Bei einer einachsigen Krafteinleitung durch die mechanische Bearbeitung auf das Rohr wird bevorzugt ein zumindest der einachsigen Krafteinleitung entgegenwirkender Gegenhalter in die Arbeitsposition verfahren. Das Rohr kann ohne Lageversatz bearbeitet werden. Der Gegenhalter kann direkt die Reaktionskraft des Rohres aufnehmen.

Zur einfachen Ansteuerung und Krafteinleitung des Werkzeuges auf das Rohr sowie zur Aufnahme der Reaktionskraft durch den Gegenhalter werden der Gegenhalter und das Werkzeug vorzugsweise in derselben Bewegungsachse verfahren. Gemäß einer bevorzugten Ausführungsform ist diese Bewegungsachse senkrecht zur Längsachse des Rohres.

Bei einer zweiachsigen Krafteinleitung durch das Werkzeug während der Bearbeitung des Rohrs auf das Rohr wird bevorzugt ein Gegenhalter mit einer zusätzlich an dem Gegenhalter vorgesehenen Greifeinrichtung in die Arbeitsposition zum Rohr verfahren. Der Gegenhalter wirkt bevorzugt einer ersten Richtung der Krafteinleitung durch das Werkzeug entgegen. Die Greifeinrichtung wirkt bevorzugt einer zweiten Richtung der Krafteinleitung senkrecht zur ersten Krafteinleitungsrichtung des Werkzeugs entgegen, sodass das Rohr durch den Gegenhalter und die Greifeinrichtung gegen eine Auslenkung in zwei Achsen - also entgegen der ersten und zweiten Krafteinleitungsrichtung - gesichert ist. Die erste Krafteinleitungsrichtung als auch die zweite Krafteinleitungsrichtung sind bevorzugt senkrecht zur Längsachse des Rohres ausgerichtet.

Eine weitere bevorzugte Ausgestaltung des Verfahrens sieht vor, dass der Gegenhalter und/oder die Greifeinrichtung jeweils zumindest ein Druckstück umfassen. Dadurch kann eine gesicherte Anlage und Aufnahme der Reaktionskraft während der mechanischen Bearbeitung durch das Werkzeug erzielt werden.

Vorteilhafterweise weist die Greifeinrichtung zwei einander gegenüberliegende Druckstücke auf, die in entgegengesetzter Richtung aufeinander zu in die Arbeitsposition zur Anlage an der Außenseite des Rohres verfahren werden. Dadurch kann eine Klemmfunktion auf das Rohr ausgeübt werden, um die durch die Durchschiebeeinrichtung definierte Ausgangsposition des Rohres für die nachfolgende mechanische Bearbeitung zu sichern.

Des Weiteren weist bevorzugt bei der mechanischen Bearbeitung des Rohres, insbesondere bei einer ruhenden Bearbeitungsposition des Rohres im Bearbeitungsraum, das Druckstück eine punktförmige, flächenförmige oder linienförmige Abstützung auf. Alternativ können am Gegenhalter und/oder der Greifeinrichtung abrollende Druckstücke zur Anlage an das Rohr übergeführt werden. Diese abrollenden Druckstücke, welche durch Walzen, Kugeln, Rollen oder dergleichen ausgebildet sein können, werden insbesondere bei einer mechanischen Bearbeitung des Rohres eingesetzt, bei der zusätzlich noch eine Verfahrbewegung des Rohres entlang seiner Längsachse überlagert wird.

Die der Erfindung zugrundeliegende Aufgabe wird des Weiteren durch eine Laserrohrschneidmaschine zum schneidenden Bearbeiten von Rohren gelöst, welche eine Werkstückunterstützungseinrichtung umfasst, die das Rohr aufnimmt und relativ zu einer das Rohr abstützenden Durchschiebeeinrichtung verfährt, welche mittels Spannbacken der Durchschiebeeinrichtung das Rohr führt und mit einer Laserbearbeitungsvorrichtung, welche einen Bearbeitungskopf aufweist, der eine aus dem Bearbeitungskopf austretenden Laserstrahl auf das Rohr richtet und mit zumindest einem zusätzlichen Werkzeug zur mechanischen Bearbeitung des Rohres, welches in zumindest einer Bewegungsrichtung zum Rohr verfahrbar ist, wobei zumindest ein Gegenhalter in eine Arbeitsposition zur Anlage am Rohr verfahrbar ist, welche entgegengesetzt zur Krafteinleitungsrichtung des Werkzeuges wirkt. Dies ermöglicht eine einfache Abstützung des Rohres bei der Einleitung von Kräften durch die mechanische Bearbeitung mittels des Werkzeuges auf das Rohr. Bevorzugte Ausführungsbeispiele der Laserrohrschneidmaschine werden in den abhängigen Ansprüchen 10 bis 15 angegeben.

Des Weiteren weist bevorzugt der Gegenhalter einen Antrieb auf, der den Gegenhalter in die Arbeitsposition und eine Ruheposition überführt. Dadurch kann der Gegenhalter nach Bedarf zur Anlage und Abstützung des Rohres positioniert werden. Insbesondere bei der Laserschneidbearbeitung wird der Gegenhalter in eine Ruheposition entfernt zum Rohr verfahren. Der Antrieb kann einen pneumatischen oder hydraulischen Zylinder, einen elektrischen Linearantrieb oder dergleichen zur Ansteuerung der Verfahrbewegung umfassen. Auch kann der Antrieb eine integrierte Seitenführung aufweisen. Zudem kann der Antrieb in einer ausgefahrenen Position geklemmt oder gesichert werden. Der Gegenhalter bildet somit ein feststehendes, nicht nachgiebiges Widerlager.

Der Gegenhalter weist bevorzugt zumindest ein Druckstück auf, welches eine punktförmige, linienförmige, flächenförmige oder abrollende Abstützung aufweist. Die Ausgestaltung der Druckstücke kann auch in Abhängigkeit der Geometrie der Rohre stehen.

Bevorzugt besteht das Druckstück aus einem elastischen Material. Dies ermöglicht eine kratzfreie Positionierung des Gegenhalters an dem zu bearbeitenden Rohr.

Gemäß einer bevorzugten Ausführungsform kann der Gegenhalter zusätzlich eine Greifeinrichtung aufweisen, welche abweichend zum Gegenhalter, der eine erste Reaktionskraft aufnimmt, einer zweiten Reaktionskraft entgegenwirkt. Insbesondere bei einer zweiachsigen Krafteinleitung während der mechanischen Bearbeitung, wie beispielsweise durch Fräsen, wird dadurch eine sichere Aufnahme des Rohres ermöglicht. Bei der zweiachsigen Krafteinleitung kann der ersten Reaktionskraft durch den Gegenhalter und der zweiten Reaktionskraft durch die Greifeinrichtung entgegengewirkt werden.

Bevorzugt wirkt die Greifeinrichtung zur Aufnahme der zweiten Reaktionskraft des Rohres senkrecht zum Gegenhalter, der die erste Reaktionskraft aufnimmt.

Zur Positionierung der Greifeinrichtung am Rohr sind bevorzugt zwei einander gegenüberliegende Druckstücke vorgesehen, die mit einer auf das Rohr wirkenden Klemmkraft zum Rohr positionierbar sind. Dadurch kann zum einen eine einfache Anpassung an unterschiedliche Querschnitte des zu bearbeitenden Rohres erzielt werden. Zum anderen kann eine hinreichende Klemmkraft über die Greifeinrichtung aufgebracht werden, ohne dass dadurch eine Deformation des Rohres erfolgt.

Bevorzugt können die Druckstücke der Greifeinrichtung mit einem Antrieb verfahrbar sein. Dieser Antrieb kann sensorgesteuert sein, sodass eine durch das Rohr abgestimmte Klemmkraft einstellbar ist.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine perspektivische Ansicht einer Laserrohrschneidmaschine,
Figur 2 eine schematische Seitenansicht auf eine Durchschiebeeinrichtung mit einem mechanischen Werkzeug und einem Gegenhalter,
Figur 3 eine schematische Ansicht von oben auf die Durchschiebeeinrichtung gemäß Figur 2,
Figur 4 eine schematische Seitenansicht einer alternativen Ausführungsform des Gegenhalters zu Figur 2, und
Figur 5 eine schematische Seitenansicht einer weitere alternativen Ausführungsform des Gegenhalters zu Figur 2.

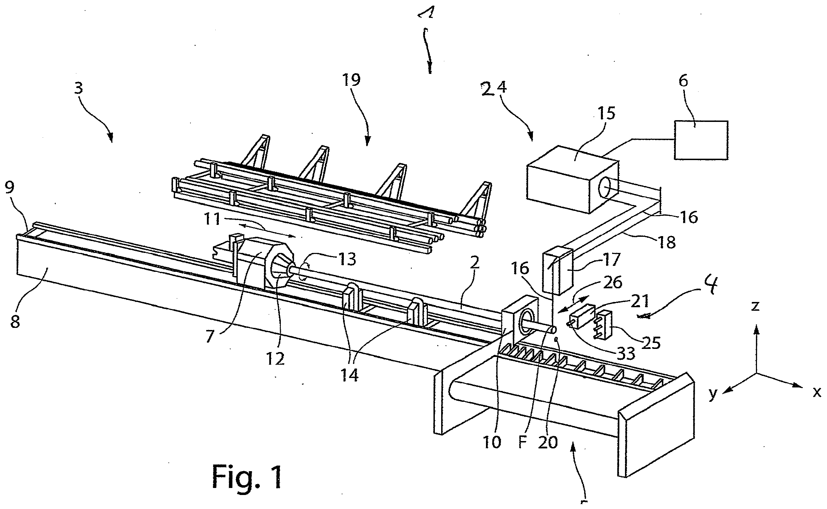

In Figur 1 ist schematisch vereinfacht eine Laserrohrschneidmaschine 1 dargestellt. Diese Laserrohrschneidmaschine 1 ist zum schneidenden Bearbeiten von Werkstücken 2 vorgesehen, wobei die Werkstücke 2 stabförmig, insbesondere rohrförmig, ausgebildet sind. Als stabförmig sind insbesondere aber auch Profile zu verstehen. Diese Laserrohrschneidmaschine 1 umfasst eine Zuführeinrichtung 3 zur seitlichen Zufuhr des zu schneidenden Rohres 2 zur Laserrohrschneidmaschine 1, beispielsweise durch eine Beladevorrichtung 19. Diese Zuführeinrichtung 3 führt das zu schneidende Rohr 2 einem Bearbeitungsraum 20 zu. In diesem Bearbeitungsraum 20 wird das Rohr durch eine Laserbearbeitungsvorrichtung 24 zum Laserschneiden des Rohres 2, insbesondere von Stababschnitten oder Rohrteilen und/oder durch eine Bearbeitungseinrichtung 4, zum mechanischen Bearbeiten mit einem Werkzeug 33 bearbeitet. Die fertig bearbeiteten Rohre 2, Stababschnitte oder Rohrteile werden über eine Entladevorrichtung 5 aufgenommen und aus der Laserrohrschneidmaschine 1 abgeführt. Alle wesentlichen Funktionen der Laserrohrschneidmaschine 1 werden mit einer numerischen Steuerungseinrichtung 6 gesteuert.

Die Zuführvorrichtung 3 umfasst eine als Werkstück-Bewegungseinrich-tung 7 dienende Dreh- und Vorschubeinrichtung sowie ein Maschinenbett 8 mit Führungsschienen 9 und eine Durchschiebeeinrichtung 10. Die Werkstück-Bewegungseinrichtung 7 ist motorisch angetrieben und in Vorschubrichtung 11 auf den Führungsschienen 9 verfahrbar. Das zuzuführende Rohr 2 ist mit einer Spanneinrichtung 12 der Werkstück-Bewegungseinrichtung 7 fixiert, die in Richtung des Doppelpfeiles 13 drehbar ist und das zugeführte Rohr 2 von außen umfasst und ortsfest klemmt. Das Rohr 2 wird während der Zuführung zur Durchschiebeeinrichtung 10 und/ oder während der Bearbeitung des Rohres 2 von mindestens einer in dem Maschinenbett 8 integrierten Werkstückabstützung 14 abgestützt. Im Bereich der Bearbeitungsvorrichtung 4 wird das Werkstück 2 durch die Durchschiebeeinrichtung 10 geführt und durch diese abgestützt. Die Durchschiebeeinrichtung 10 ist so ausgelegt, dass das eingespannte Rohr 2 in Vorschubrichtung geführt und nicht ortsfest geklemmt ist. Das Rohr 2 ist in der Durchschiebevorrichtung 10 um die Drehachse 13 drehbar.

Die Laserbearbeitungsvorrichtung 24 umfasst eine Laserstrahlquelle 15 zum Erzeugen eines Laserstrahls 16, einen Bearbeitungskopf 17 und eine Strahlführung 18, die den Laserstrahl 16 von der Laserstrahlquelle 15 zum Bearbeitungskopf 17 führt. Der Laserstrahl 16 tritt aus dem Bearbeitungskopf 17 aus und wird an einer Bearbeitungsstelle F innerhalb des Bearbeitungsraumes 20 auf die Außenumfangfläche des Rohres 2 fokussiert.

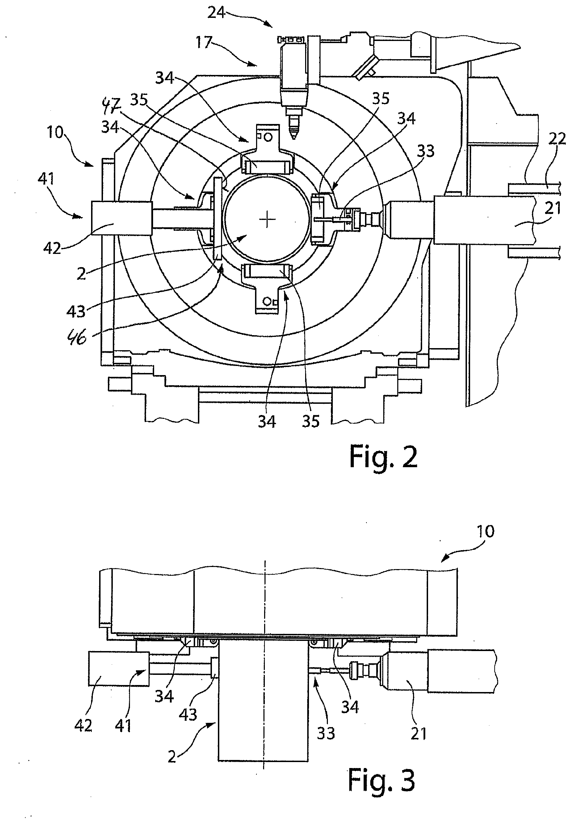

Dem Bearbeitungsraum 20 zugeordnet und/oder benachbart zum Bearbeitungskopf 17 ist eine Werkzeugaufnahme 21 der Bearbeitungsvorrichtung 4 vorgesehen, welche mittels einer Führung 22 (Figur 2) zumindest innerhalb des Bearbeitungsraumes 20 verfahrbar ist, sodass die Werkzeugaufnahme 21 mit einem darin eingespannten Werkzeug 33 zur Bearbeitungsstelle F verfahrbar ist und wiederum von dieser entfernt werden kann.

Entfernt von der Bearbeitungsstelle F kann des Weiteren ein Magazin 25 vorgesehen sein. Dieses Magazin 25 kann beispielsweise als ein Linearmagazin oder Revolvermagazin ausgebildet sein. In diesem Magazin 25 können verschiedene Werkzeuge 33, wie beispielsweise Bohrer, Fließbohrer, Gewindeschneidwerkzeuge oder Gewindeformwerkzeuge, gespeichert sein. Die Werkzeugaufnahme 21 ist bevorzugt gemäß dem dargestellten Doppelpfeil 26 in Y-Richtung zumindest zwischen dem Magazin 25 und der Bearbeitungsstelle F verfahrbar. Zur Verwendung eines Linearmagazins 25 kann die Werkzeugaufnahme 21 zudem in Z-Richtung verfahrbar sein. Alternativ kann auch das Magazin 25 in Z-Richtung verfahrbar sein.

Auf der dem Maschinenbett 8 abgewandten Seite der Durchschiebeeinrichtung 10 ist die Entladevorrichtung 5 vorgesehen, die aus dem Rohr 2 geschnittene Werkstückteile oder -abschnitte sowie ein Restwerkstück aus der Laserrohrschneidmaschine 1 abführt.

In Figur 2 ist eine schematische Seitenansicht auf die Durchschiebeeinrichtung 10 dargestellt. Die Durchschiebeeinrichtung 10 umfasst mehrere Spannbacken 34, welche nachgiebig in der Durchschiebeeinrichtung 10 aufgenommen sind. Beispielsweise sind vier Spannbacken 34 vorgesehen, welche paarweise einander gegenüberliegen und um 90° versetzt zueinander angeordnet sind. Die Spannbacken 34 können bezüglich deren Spannkraft einstellbar sein. Durch diese Spannbacken 34, welche vorzugsweise Walzen 35 aufweisen, die an dem Rohr 2 anliegen, kann eine Führung des Rohres 2 für die Laserschneidbearbeitung erfolgen.

Im Bearbeitungsraum 20 ist ein Gegenhalter 41 vorgesehen. Dieser Gegenhalter 41 umfasst einen Antrieb 42, durch welchen ein Druckstück 43 des Gegenhalters 41 in eine in Figur 2 dargestellte Arbeitsposition 46 überführbar ist. In dieser Arbeitsposition 46 liegt das Druckstück 43 an einer Außenseite des Rohres 2 an. In einer nicht näher dargestellten Ruheposition ist das Druckstück 43 entfernt vom Rohr 2 positioniert. Vorzugsweise erfolgt die Positionierung des Druckstückes 43 in die Arbeitsposition 46 und die dazu entfernte Ruheposition durch eine Verfahrbewegung entlang einer Y-Achse. Diese Verfahrbewegung wird durch den Antrieb 42 angesteuert. Der Antrieb 42 kann durch einen pneumatischen, hydraulischen Zylinder erfolgen. Auch kann ein elektrischer Linearantrieb oder dergleichen vorgesehen sein. Die Ansteuerung des Gegenhalters 41 erfolgt durch die Steuerungsvorrichtung 6.

Das Druckstück 43 kann gemäß einer ersten Ausführungsform als Fläche oder tellerförmig ausgebildet sein. Bevorzugt kann eine Anlagefläche 47 des Druckstückes 43 aus einem elastischen Material, insbesondere aus Kunststoff, ausgebildet sein, um Druckstellen oder Kratzer zu vermeiden. Alternativ kann das Druckstück 43 auch eine in Richtung auf das Rohr 2 gekrümmte, kreisförmige oder V-förmige Kante aufweisen.

Das Werkzeug 33 ist in Figur 2 in einer Position dargestellt, kurz bevor dieses zur Bearbeitung an dem Rohr 2 angreift. Beim Anbringen einer Bohrung wird das Werkzeug 33 entlang der X-Achse auf die Außenseite des Rohres 2 zubewegt. Dadurch wirkt eine einachsige Krafteinleitung, insbesondere in Y-Richtung. Der Gegenhalter 41 wirkt dieser einachsigen Krafteinleitung durch eine erste Reaktionskraft entgegen. Dadurch kann bei einer Krafteinleitung durch das Werkzeug 33, welche größer als die Spannkraft des Spannbackens 34 ist, das Rohr 2 in der geführten Lage durch die Durchschiebeeinrichtung 10 gehalten werden. Der Gegenhalter 41 kann in der Arbeitsposition 46 feststehend positioniert sein. Beispielsweise kann der Zylinder eine integrierte Klemm- oder Arretierfunktion hierzu aufweisen.

In Figur 3 ist eine schematische Ansicht auf die Durchschiebeeinrichtung 10 mit dem Werkzeug 33 und dem zum Rohr 2 positionierten Gegenhalter 41 dargestellt. Der Gegenhalter 41 greift an der Außenseite des Rohres 2 an. Das Werkzeug 33 wird gegenüberliegend ebenfalls zur Außenseite des Rohres 2 zugeführt. Diese Anordnung weist den Vorteil auf, dass keine Einschränkung der Rohrlänge bei der Bearbeitung des Rohres 2, wie beispielsweise durch eine abstützende Lanze, gegeben ist, die im Rohrinneren zu positionieren ist.

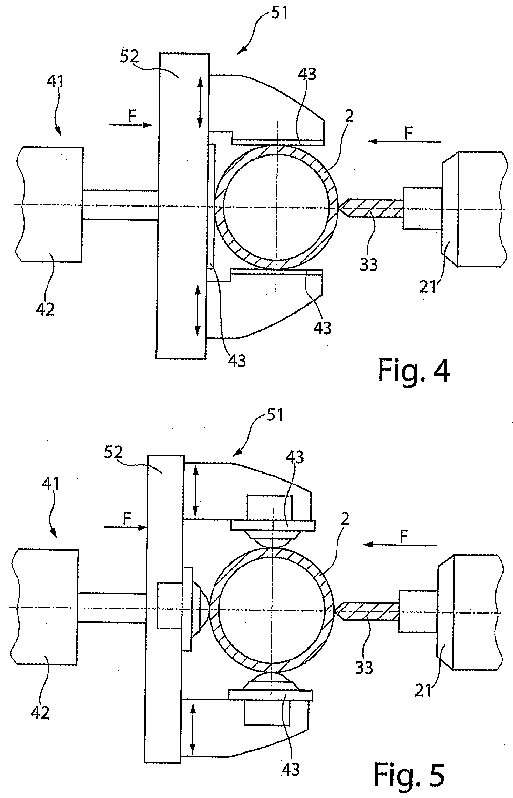

In Figur 4 ist eine schematische Seitenansicht einer alternativen Ausführungsform des Gegenhalters 41 dargestellt. Dieser Gegenhalter 41 weist zusätzlich zu einem Druckstück 43, welches einer ersten Krafteinleitungsrichtung entgegenwirkt, eine Greifeinrichtung 51 auf. Diese Greifeinrichtung 51 bildet eine zweite Reaktionskraft, welche einer weiteren Richtung der Krafteinleitung, beispielsweise in Z-Richtung, entgegenwirkt. Bei einer mechanischen Bearbeitung mit einer zweiachsigen Krafteinleitung, beispielsweise beim Fräsen, kann zusätzlich einer zweiten Krafteinleitungsrichtung, die senkrecht zur ersten Krafteinrichtung ist, entgegengewirkt werden.

Die Greifeinrichtung 51 weist beispielsweise zwei einander gegenüberliegende Druckstücke 43 auf. Diese einander gegenüberliegenden Druckstücke 43 können mit einem Stellantrieb 52 aufeinander zubewegt werden, um an der Außenseite des Rohres 2 anzugreifen. Dadurch ist mit dem Druckstück 43 als Gegenhalter 41 eine Dreipunktauflage am Rohr 2 gegeben. Somit kann das Rohr 2 bei einer Krafteinleitung durch das Werkzeug 33 in Y-Richtung und in Z-Richtung in einer definierten Lage gehalten werden. Eine Krafteinleitung durch das Werkzeug 33 in X-Richtung wird durch die Werkstück-Bewegungseinrichtung 7 aufgenommen, da das Rohr 2 druck- und zugstabil ist.

Durch den Stellantrieb 52 der Greifeinrichtung 51 kann eine Spannfunktion angesteuert werden. Diese auf das Rohr 2 wirkende Spannfunktion kann größer als die voreingestellte Spannkraft der Spannbacken 34 sein. Die einstellbare Spannkraft wird auf die Eigensteifigkeit des Rohres 2 angepasst, um eine Verformung des Rohres 2 zu vermeiden.

Die Druckstücke 43 der Greifeinrichtung 51 können analog zu dem Druckstück 43 des Gegenhalters 41 ausgebildet sein.

In Figur 5 ist eine alternative Ausführungsform des Gegenhalters 41 mit der Greifeinrichtung 51 zu Figur 4 dargestellt. Diese Ausführungsform unterscheidet sich in der Ausgestaltung der Druckstücke 43. Die Druckstücke 43 sind in der Ausführungsform gemäß Figur 5 durch drehbar gelagerte Kugeln oder Rollen ausgebildet. Dies weist den Vorteil auf, dass während einer mechanischen Bearbeitung durch das Werkzeug 33 zusätzlich das Rohr 2 durch die Werkstück-Bewegungseinrichtung 7 entlang der Längsachse des Rohres 2, insbesondere in X-Richtung, verfahrbar ist. Dadurch kann eine reibungsminimierte Führung erzielt werden. Alternativ können auch nicht abrollende Druckstücke vorgesehen sein, welche zur Abstützung ein Material mit hohen Gleiteigenschaften aufweisen.

## Patentansprüche

1. Verfahren zum schneidenden Bearbeiten von Rohren (2) in einer Laserrohrschneidmaschine (1),
- bei dem ein zu bearbeitendes Rohr (2) mit einer Werkstückbewegungseinrichtung (7) gehalten und relativ zu einer das Rohr (2) abstützenden Durchschiebeeinrichtung (10) in X-Richtung verfahren wird,
- bei dem mit einer Laserbearbeitungsvorrichtung (24) das Rohr (2) bearbeitet und während der Laserbearbeitung das Rohr (2) durch Spannbacken (34) der Durchschiebeeinrichtung (10) in Y- und Z-Richtung geführt und mit einer Spannkraft gehalten wird, und
- bei dem das Rohr (2) zusätzlich mit einem Werkzeug (33) einer Bearbeitungsvorrichtung (4) mechanisch bearbeitet wird, welches in zumindest einer Bewegungsachse zum Rohr (2) verfahren wird,
**dadurch gekennzeichnet,**
- **dass** zumindest ein Gegenhalter (41) vor Beginn der mechanischen Bearbeitung des Rohres (2) mit dem Werkzeug (33) in eine Arbeitsposition (46) zur Anlage am Rohr (2) verfahren wird.

2. Verfahren nach Anspruch 1, **dadurch gekennzeichnet, dass** der zumindest eine Gegenhalter (41) in dieser Arbeitsposition (46) feststehend gehalten wird.

3. Verfahren nach Anspruch 1 oder 2, **dadurch gekennzeichnet, dass** der zumindest eine Gegenhalter (41) zur Anlage an einer Außenseite des Rohres (2) übergeführt wird und die Arbeitsposition (46) einnimmt und/oder dass das zumindest eine Werkzeug (33) zur mechanischen Bearbeitung des Rohres (2) von der Außenseite gegen das Rohr (2) zugeführt wird.

4. Verfahren nach einem der vorhergehenden Ansprüche, **dadurch gekennzeichnet, dass** der zumindest eine Gegenhalter (41) während einer Laserbearbeitung des Rohres (2) in eine Ruheposition entfernt zum Rohr (2) positioniert und vor der mechanischen Bearbeitung des Rohres (2) mit dem Werkzeug (33) in die Arbeitsposition (46) zur Anlage am Rohr (2) übergeführt wird.

5. Verfahren nach einem der vorhergehenden Ansprüche, **dadurch gekennzeichnet, dass** bei einer einachsigen Krafteinleitung auf das Rohr (2) durch die mechanische Bearbeitung mit dem zumindest einen Werkzeug (33) ein zumindest der einachsigen Krafteinleitung entgegenwirkender Gegenhalter (41) in die Arbeitsposition (46) verfahren wird und vorzugsweise der Gegenhalter (41) und das Werkzeug (33) in derselben Bewegungsachse und jeweils in entgegengesetzter Richtung zur Außenseite des Rohres (2) verfahren werden.

6. Verfahren nach einem der Ansprüche 1 bis 4, **dadurch gekennzeichnet, dass** bei einer zweiachsigen Krafteinleitung auf das Rohr (2) durch die mechanische Bearbeitung mit dem zumindest einen Werkzeug (33) der Gegenhalter (41) und eine zusätzlich an dem Gegenhalter (41) vorgesehene Greifeinrichtung (51) in die Arbeitsposition (46) zum Rohr (2) verfahren werden, wobei der Gegenhalter (41) eine erste Reaktionskraft und die Greifeinrichtung (51) eine zweite Reaktionskraft, vorzugsweise senkrecht zur ersten Reaktionskraft des Gegenhalters (41), aufnimmt.

7. Verfahren nach Anspruch 6, **dadurch gekennzeichnet, dass** der Gegenhalter (41) und/oder die Greifeinrichtung (51) jeweils zumindest ein Druckstück (43) umfassen und vorzugsweise die Greifeinrichtung (51) zwei einander gegenüberliegende Druckstücke (43) aufweist, die in entgegengesetzter Richtung in die Arbeitsposition (46) zur Anlage an einer Außenseite des Rohres (2) verfahren werden.

8. Verfahren nach Anspruch 7, **dadurch gekennzeichnet, dass** bei einer mechanischen Bearbeitung des Rohres (2) mit einer ein- oder zweiachsigen Krafteinleitung durch das Werkzeug (33), insbesondere bei einer ruhenden Positionierung des Rohres (2) im Bearbeitungsraum (20), punktförmige, linienförmige oder flächenförmige Druckstücke (43) zur Anlage an das Rohr (2) übergeführt werden oder dass bei einer mechanischen Bearbeitung des Rohres (2), insbesondere bei einer Verfahrbewegung des Rohres (2) entlang der Längsachse des Rohres (2), abrollende Druckstücke (43) zur Anlage an das Rohr (2) übergeführt werden.

9. Laserrohrschneidmaschine zur schneidenden Bearbeitung von Rohren (2), insbesondere zur Durchführung des Verfahrens nach einem der Ansprüche 1 bis 8,
- mit einer Werkstückbewegungseinrichtung (7), welche das Rohr (2) aufnimmt und relativ zu einer das Rohr (2) abstützenden Durchschiebeeinrichtung (10) in X-Richtung verfährt, welches durch Spannbacken (34) der Durchschiebeeinrichtung (10) in Y- und Z-Richtung geführt ist,
- mit einer Laserbearbeitungsvorrichtung (24), die der Durchschiebeeinrichtung (10) zugeordnet ist und einen Bearbeitungskopf (17) aufweist, der einen aus dem Bearbeitungskopf (17) austretenden Laserstrahl (16) auf das Rohr (2) richtet,
- mit zumindest einem Werkzeug (33) einer Bearbeitungsvorrichtung (4) zur mechanischen Bearbeitung des Rohres (2), welches in zumindest einer Bewegungsrichtung zum Rohr (2) verfahrbar ist,
**dadurch gekennzeichnet,**
- **dass** zumindest ein Gegenhalter (41) in eine Arbeitsposition (46) zur Anlage am Rohr (2) verfahrbar ist, welcher entgegengesetzt zur Krafteinleitungsrichtung des Werkzeuges (33) wirkt.

10. Laserrohrschneidmaschine nach Anspruch 9, **dadurch gekennzeichnet, dass** der Gegenhalter (41) einen Antrieb (42) aufweist, der den Gegenhalter (41) in die Arbeitsposition (46) und in eine Ruheposition überführt.

11. Laserrohrschneidmaschine nach Anspruch 9 oder 10, **dadurch gekennzeichnet, dass** der Gegenhalter (41) in der Arbeitsposition (46) mit einer lösbaren Verriegelungseinrichtung stillstehend gesichert ist.

12. Laserrohrschneidmaschine nach einem der Ansprüche 9 bis 11, **dadurch gekennzeichnet, dass** der Gegenhalter (41) zumindest ein Druckstück (43) mit einer punktförmigen, linienförmigen, flächenförmigen oder abrollenden Abstützung aufweist.

13. Laserrohrschneidmaschine nach einem der Ansprüche 9 bis 12, **dadurch gekennzeichnet, dass** der Gegenhalter zumindest ein Druckstück (43) aus einem elastischen Material aufweist.

14. Laserrohrschneidmaschine nach einem der Ansprüche 9 bis 13, **dadurch gekennzeichnet, dass** der Gegenhalter (41) zusätzlich eine Greifeinrichtung (51) aufweist, welche abweichend zu einer Reaktionskraft des Gegenhalters (41) wirkt, und vorzugsweise
die Greifeinrichtung (51) eine zweite Reaktionskraft des Rohres (2) aufnimmt, welche senkrecht zur ersten Reaktionskraft des Gegenhalters ausgerichtet ist.

15. Laserrohrschneidmaschine nach Anspruch 14, **dadurch gekennzeichnet, dass** die Greifeinrichtung (51) zumindest zwei einander gegenüberliegende Druckstücke (43) aufweist, die mit einer Klemmkraft an dem Rohr (2) angreift und vorzugsweise
die Druckstücke (43) der Greifeinrichtung (51) mit einem Antrieb (52) verfahrbar sind.

## Claims

1. A method for cutting tubes (2) in a laser tube cutting machine (1),
- in which a tube (2) to be processed is held with a workpiece moving device (7) and is displaced in the X direction relative to a feed-through device (10) supporting the tube (2),
- in which the tube (2) is processed with a laser processing device (24) and during the laser processing the tube (2) is guided in the Y and Z direction by clamping jaws (34) of the feed-through device (10) and held with a clamping force, and
- in which the tube (2) is additionally mechanically processed with a tool (33) of a processing apparatus (4), which tool is displaced relative to the tube (2) in at least one movement axis,
**characterised in that**
- at least one brace (41) is moved with the tool (33) into a working position (46) to abut against the tube (2) before the beginning of the mechanical processing of the tube (2).

2. The method according to Claim 1, **characterised in that** the at least one brace (41) is held stationary in this working position (46).

3. The method according to Claim 1 or 2, **characterised in that** the at least one brace (41) is conveyed to abut against an outer side of the tube (2) and assumes the working position (46) and/or that the at least one tool (33) is fed towards the tube (2) from the outer side for the mechanical processing of the tube (2).

4. The method according to one of the preceding claims, **characterised in that** the at least one brace (41) is positioned in a rest position away from the tube (2) during laser processing of the tube (2) and is conveyed with the tool (33) into the working position (46) to abut against the tube (2) before the mechanical processing of the tube (2).

5. The method according to one of the preceding claims, **characterised in that** when a uniaxial force is applied to the tube (2) by the mechanical processing with the at least one tool (33), a brace (41) counteracting at least the application of uniaxial force is displaced into the working position (46) and the brace (41) and the tool (33) are preferably displaced toward the outer side of the tube (2) in the same movement axis and in opposite directions.

6. The method according to one of Claims 1 to 4, **characterised in that** when a biaxial force is applied to the tube (2) by the mechanical processing with the at least one tool (33), the brace (41) and a gripping device (51) additionally provided on the brace (41) are displaced toward the tube (2) into the working position (46), the brace (41) absorbing a first reaction force and the gripping device (51) absorbing a second reaction force, preferably perpendicular to the first reaction force of the brace (41).

7. The method according to Claim 6, **characterised in that** the brace (41) and/or the gripping device (51) each comprise at least one pressure piece (43) and preferably the gripping device (51) has two pressure pieces (43) located opposite each other, which are displaced in opposite directions into the working position (46) to abut against an outer side of the tube (2).

8. The method according to Claim 7, **characterised in that** during mechanical processing of the tube (2) with an application of uniaxial or biaxial force by means of the tool (33), in particular with a stationary positioning of the tube (2) in the processing space (20), punctiform, linear or planar pressure pieces (43) are conveyed to abut against the tube (2) or that during mechanical processing of the tube (2), in particular during a displacement movement of the tube (2) along the longitudinal axis of the tube (2), unrolling pressure pieces (43) are conveyed to abut against the tube (2).

9. A laser tube cutting machine for cutting tubes (2), in particular for carrying out the method according to one of Claims 1 to 8,
- with a workpiece moving device (7), which receives the tube (2) and moves it in the X direction relative to a feed-through device (10) supporting the tube (2), which tube is guided in the Y and Z direction by clamping jaws (34) of the feed-through device (10),
- with a laser processing device (24) which is assigned to the feed-through device (10) and has a processing head (17) which directs a laser beam (16) emerging from the processing head (17) onto the tube (2),
- with at least one tool (33) of a processing device (4) for mechanically processing the tube (2), which tool can be displaced in at least one movement direction relative to the tube (2),
**characterised in that**
- at least one brace (41) can be displaced into a working position (46) to abut against the tube (2), which acts in the opposite direction to the direction of force application of the tool (33).

10. The laser tube cutting machine according to Claim 9, **characterised in that** the brace (41) has a drive (42) which conveys the brace (41) into the working position (46) and into a rest position.

11. The laser tube cutting machine according to Claim 9 or 10, **characterised in that** the brace (41) is secured stationarily in the working position (46) with a releasable locking device.

12. The laser tube cutting machine according to one of Claims 9 to 11, **characterised in that** the brace (41) has at least one pressure piece (43) with a punctiform, linear, planar or unrolling support.

13. The laser tube cutting machine according to one of Claims 9 to 12, **characterised in that** the brace has at least one pressure piece (43) made of an elastic material.

14. The laser tube cutting machine according to one of Claims 9 to 13, **characterised in that** the brace (41) additionally has a gripping device (51) which acts differently to a reaction force of the brace (41), and the gripping device (51) preferably absorbs a second reaction force of the tube (2), which is oriented perpendicular to the first reaction force of the brace.

15. The laser tube cutting machine according to Claim 14, **characterised in that** the gripping device (51) has at least two pressure pieces (43) located opposite each other, which grip the tube (2) with a clamping force and the pressure pieces (43) of the gripping device (51) can preferably be displaced with a drive (52).

## Revendications

1. Procédé d'usinage par découpe de tubes (2) dans une machine de découpe de tubes par laser (1),
- dans lequel un tube (2) à usiner est maintenu par un dispositif de déplacement de pièce (7) et est déplacé dans la direction X par rapport à un dispositif de poussée (10) supportant le tube (2),
- dans lequel le tube (2) est usiné par un dispositif d'usinage par laser (24) et pendant l'usinage par laser, le tube (2) est guidé dans la direction Y et Z par des mâchoires de serrage (34) du dispositif de poussée (10) et maintenu par une force de serrage, et
- dans lequel le tube (2) est en outre usiné mécaniquement par un outil (33) d'un dispositif d'usinage (4), qui est déplacé dans au moins un axe de déplacement vers le tube (2),
**caractérisé en ce**
- **qu'**au moins un bras support (41) est déplacé avec l'outil (33) dans une position de travail (46) pour venir en contact avec le tube (2) avant le début de l'usinage mécanique du tube (2).

2. Procédé selon la revendication 1, **caractérisé en ce que** l'au moins un bras support (41) est maintenu immobile dans cette position de travail (46).

3. Procédé selon la revendication 1 ou 2, **caractérisé en ce que** l'au moins un bras support (41) est transféré pour venir en contact avec un côté extérieur du tube (2) et prend la position de travail (46) et/ou **en ce que** l'au moins un outil (33) pour l'usinage mécanique du tube (2) est amené depuis le côté extérieur contre le tube (2).

4. Procédé selon l'une quelconque des revendications précédentes, **caractérisé en ce que** l'au moins un bras support (41) est positionné dans une position de repos éloignée du tube (2) lors d'un usinage par laser du tube (2) et est transféré avant l'usinage mécanique du tube (2) avec l'outil (33) dans la position de travail (46) pour venir en contact avec le tube (2).

5. Procédé selon l'une quelconque des revendications précédentes, **caractérisé en ce que** lorsqu'une force uniaxiale est appliquée au tube (2) par usinage mécanique avec l'au moins un outil (33), un bras support (41) s'opposant à au moins la force uniaxiale appliquée est déplacé dans la position de travail (46) et, de préférence, le bras support (41) et l'outil (33) sont déplacés dans le même axe de déplacement et respectivement dans la direction opposée au côté extérieur du tube (2).

6. Procédé selon l'une quelconque des revendications 1 à 4, **caractérisé en ce que** lorsqu'une force biaxiale est appliquée au tube (2) par usinage mécanique avec l'au moins un outil (33), le bras support (41) et un dispositif de préhension (51) disposé en outre sur le bras support (41) sont déplacés dans la position de travail (46) vers le tube (2), le bras support (41) absorbant une première force de réaction et le dispositif de préhension (51) absorbant une seconde force de réaction, de préférence perpendiculaire à la première force de réaction du bras support (41).

7. Procédé selon la revendication 6, **caractérisé en ce que** le bras support (41) et/ou le dispositif de préhension (51) comportent chacun au moins une pièce de pression (43) et de préférence le dispositif de préhension (51) comprend deux pièces de pression (43) se trouvant l'une en face de l'autre, qui se déplacent dans la direction opposée dans la position de travail (46) pour venir en contact avec un côté extérieur du tube (2).

8. Procédé selon la revendication 7, **caractérisé en ce que** lors de l'usinage mécanique du tube (2) avec une application de force à un ou deux axes au moyen de l'outil (33), en particulier avec un positionnement stationnaire du tube (2) dans l'espace d'usinage (20), des pièces de pression (43) en forme de point, linéaires ou planes sont transférées pour venir en contact avec le tube (2) ou **en ce que** lors d'un usinage mécanique du tube (2), en particulier lors d'un mouvement de déplacement du tube (2) le long de l'axe longitudinal du tube (2), des pièces de pression déroulantes (43) sont transférées pour venir en contact avec le tube (2).

9. Machine de découpe de tubes par laser pour l'usinage par découpe de tubes (2), en particulier pour la mise en oeuvre du procédé selon l'une quelconque des revendications 1 à 8,
- comprenant un dispositif de déplacement de pièce (7), qui reçoit le tube (2) et se déplace dans la direction X par rapport à un dispositif de poussée (10) supportant le tube (2), qui est guidé dans la direction Y et Z par des mâchoires de serrage (34) du dispositif de poussée (10),
- comprenant un dispositif d'usinage par laser (24) qui est associé au dispositif de poussée (10) et qui comporte une tête d'usinage (17) qui oriente un faisceau laser (16) sortant de la tête d'usinage (17) sur le tube (2),
- comprenant au moins un outil (33) d'un dispositif d'usinage (4) pour l'usinage mécanique du tube (2), qui peut être déplacé dans au moins une direction de déplacement par rapport au tube (2),
**caractérisée en ce**
- **qu'**au moins un bras support (41) peut être déplacé dans une position de travail (46) pour venir en contact avec le tube (2), qui agit dans le sens opposé à la direction d'application de la force de l'outil (33).

10. Machine de découpe de tubes par laser selon la revendication 9, **caractérisée en ce que** le bras support (41) comporte un entraînement (42) qui transfère le bras support (41) dans la position de travail (46) et dans une position de repos.

11. Machine de découpe de tubes par laser selon la revendication 9 ou 10, **caractérisée en ce que** le bras support (41) est fixé pour être immobile dans la position de travail (46) par un dispositif de verrouillage libérable.

12. Machine de découpe de tubes par laser selon l'une quelconque des revendications 9 à 11, **caractérisée en ce que** le bras support (41) comporte au moins une pièce de pression (43) avec un appui en forme de point, linéaire, plan ou déroulant.

13. Machine de découpe de tubes par laser selon l'une quelconque des revendications 9 à 12, **caractérisée en ce que** le bras support comporte au moins une pièce de pression (43) en matériau élastique.

14. Machine de découpe de tubes par laser selon l'une quelconque des revendications 9 à 13, **caractérisée en ce que** le bras support (41) comporte en outre un dispositif de préhension (51) qui agit différemment d'une force de réaction du bras support (41), et de préférence le dispositif de préhension (51) absorbe une seconde force de réaction du tube (2), qui est alignée perpendiculairement à la première force de réaction du bras support.

15. Machine de découpe de tubes par laser selon la revendication 14, **caractérisée en ce que** le dispositif de préhension (51) comporte au moins deux pièces de pression (43) se trouvant l'une en face de l'autre, qui agissent sur le tube (2) avec une force de serrage et de préférence les pièces de pression (43) du dispositif de préhension (51) peuvent être déplacées par un entraînement (52).
